# EUROPEAN PATENT APPLICATION

(11) **EP 4 765 460 A1**
(43) Date of publication of application: **24.06.2026**
(21) Application number: 25774889.7
(22) Date of filing: 06.03.2025
(51) Int. Cl.: H01M 50/581, H01M 50/204, H01M 50/249, H01M 10/658

(54) **BATTERY MODULE, BATTERY PACK INCLUDING SAME, AND VEHICLE**

(30) Priority: 18.03.2024 KR 20240037366
(71) Applicant: LG Energy Solution, Ltd., Seoul 07335 (KR)
(72) Inventor: KIM, Duk-You, Daejeon 34122 (KR); LEE, Keun-Wook, Daejeon 34122 (KR)
(74) Representative: Plasseraud IP
(86) International application number: PCT/KR2025/003001
(87) International publication number: WO 2025/198227

(57) **Abstract**

The present disclosure relates to a battery module including: a plurality of battery cells; and a deformation member provided on at least one side of the battery cell and configured to change its shape at a specific temperature or higher and increase in volume in a direction toward the one side.

## Description

### TECHNICAL FIELD

The present disclosure relates to a battery module, and a battery pack and a vehicle including the same. Specifically, the present disclosure relates to a battery module capable of suppressing thermal propagation inside the battery module, and a battery pack and a vehicle including the same.

This application is based on and claims priority from Korean Patent Application No. 10-2024-0037366, filed on March 18, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity. Accordingly, the number of battery cells included in the battery module or pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled to the appropriate temperature, unexpected ignition or explosion is more likely to occur. In addition, the battery module has a structure in which the battery cells are intensively stored inside a module housing. Thus, if a thermal event such as thermal runaway occurs inside a battery cell, high-temperature gas or flames emitted from the battery cell may spread to adjacent battery cells, causing a chain reaction of explosions in the battery cells, which is very dangerous.

Therefore, there is a need to develop a structure capable of suppressing and delaying thermal propagation by clearly partitioning and separating the battery cells, thereby preventing, even if a thermal event occurs in some battery cells inside the battery module, the high-temperature gas or flames from spreading to other battery cells inside the battery module and causing thermal runaway.

### DISCLOSURE

### Technical Problem

The present disclosure is designed to solve the problems of the related art, and therefore the present disclosure is directed to providing a battery module capable of effectively preventing or delaying thermal runaway propagation between battery cells by clearly separating the battery cells.

The present disclosure is also to provide a battery pack and vehicle that include such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; and a deformation member provided on at least one side of the battery cell and configured to change its shape at a specific temperature or higher and increase in volume in a direction toward the one side.

The deformation member may be formed of a shape-memory alloy.

The volume of the deformation member may be configured to change reversibly.

The plurality of battery cells may be stacked in one direction, and the deformation member may be provided between adjacent battery cells, so that a gap between a battery cell of which a temperature reached the specific temperature or higher and an adjacent battery cell is increased by deformation of the deformation member.

A plurality of deformation members may be disposed along the one direction, and a deformation member that comes into contact with the battery cell of which the temperature reached the specific temperature or higher increases in volume in the one direction, and the remaining deformation members are configured to decrease in volume in the one direction.

The deformation member may include a first contact portion configured to come into contact with one side of the battery cell and having one end and the other end, a second contact portion configured to be spaced a predetermined distance apart from the first contact portion and having one end facing one end of the first contact portion and the other end facing the other end of the first contact portion, and a connection portion configured to connect the first contact portion and the second contact portion to each other and increase a gap between the first contact portion and the second contact portion at the specific temperature or higher.

The connection portion may be configured to connect one end of the first contact portion and the other end of the second contact portion to each other.

The deformation member may include a folded portion configured to be folded at least in part.

The deformation member may be configured such that the folded portion is unfolded at the specific temperature or higher.

The folded portion may be configured to have elasticity.

The deformation member may be provided at a bottom of the battery cell and may be configured to separate a battery cell of which the temperature reached the specific temperature or higher from neighboring battery cells.

In another aspect of the present disclosure, there is provided a battery module including: a plurality of battery cells stacked in one direction; and a deformation member configured as a shape-memory alloy plate and provided between the battery cells or at a bottom of each battery cell, wherein the deformation member may have at least two folded portions configured to be folded in opposite directions, and in a case where a temperature of one of the battery cells rises, the folded portion may be unfolded at a specific temperature or higher so that the battery cell may be spaced or separated from remaining battery cells.

In another aspect of the present disclosure, there is provided a battery pack including a battery module according to the present disclosure.

A plurality of battery modules may be provided, and the battery pack according to the present disclosure may further include a module deformation member provided between adjacent battery modules and configured to increase a gap between the adjacent battery modules at a specific temperature or higher.

A plurality of battery modules may be provided, and the battery pack according to the present disclosure may further include a module deformation member provided at a bottom of the battery module and configured to separate the battery module from neighboring battery modules at a specific temperature or higher.

In another aspect of the present disclosure, there is provided a battery pack including: a plurality of battery modules stacked in one direction; and a module deformation member configured as a shape-memory alloy plate and provided between the battery modules or at a bottom of each battery module, wherein the module deformation member may have at least two folded portions configured to be folded in opposite directions, and in a case where a temperature of any one of the battery modules rises, the folded portion may be unfolded at a specific temperature or higher, so that the battery module may be spaced or separated from remaining battery modules.

In another aspect of the present disclosure, there is provided a vehicle including a battery pack according to the present disclosure.

### Advantageous Effects

According to one aspect of the present disclosure, when a thermal event occurs in a battery cell inside a battery module, the shape of the deformation member made of shape-memory alloys changes, so that the battery cell where the event occurred can be spaced or separated from an adjacent battery cell.

That is, according to the above aspect of the present disclosure, even if a thermal event occurs in some battery cells inside the battery module, it is possible to effectively prevent or delay heat from being transferred to other battery cells inside the battery module and causing thermal runaway. Therefore, the safety and reliability of the battery module may be ensured.

In addition, according to another aspect of the present disclosure, even if the shape of the deformation member is deformed so that the gap between the heating battery cell and another battery cell increases, the volume of the entire battery cell stack may be maintained, thereby securing the energy efficiency of the battery module.

In addition, according to another aspect of the present disclosure, a certain level of heating can be detected using the deformation member in contact with the battery cell. Therefore, additional temperature sensing and control components are unnecessary, so that productivity may be improved.

In addition, according to another aspect of the present disclosure, events resulting from thermal runaway of a battery pack including multiple battery modules or a device equipped with them, such as a fire or explosion, can be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-sectional view taken along line I - I' in FIG. 1.
FIG. 4 is a drawing illustrating a deformation member that is deformed when the temperature of a battery cell included in a battery module reaches a specific temperature or higher according to an embodiment of the present disclosure.
FIG. 5 and FIG. 6 are drawings illustrating the structure of a deformation member included in a battery module according to an embodiment of the present disclosure.
FIG. 7 is an internal perspective view of a battery module according to another embodiment of the present disclosure.
FIG. 8 is a side view of a battery cell and a deformation member included in a battery module according to another embodiment of the present disclosure.
FIG. 9 is an internal perspective view illustrating a deformation member that is deformed when the temperature of a battery cell included in a battery module reaches a specific temperature or higher according to another embodiment of the present disclosure.
FIG. 10 is a side view illustrating deformation member that is deformed when the temperature of a battery cell included in a battery module reaches a specific temperature or higher according to another embodiment of the present disclosure.
FIG. 11 is a schematic perspective view of a battery pack including a battery module according to an embodiment of the present disclosure.
FIG. 12 is a cross-sectional view of a battery pack to which a module deformation member is applied according to an embodiment of the present disclosure.
FIG. 13 is a cross-sectional view of a battery pack to which a module deformation member is applied according to another embodiment of the present disclosure.
FIG. 14 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction, i.e., a longitudinal direction of the battery cell, perpendicular to the X-axis direction on the horizontal plane (X-Y plane), and the Z-axis direction may indicate an up-down direction (vertical direction), i.e., a height direction of the battery cell, perpendicular to both the X-axis direction and the Y-axis direction.

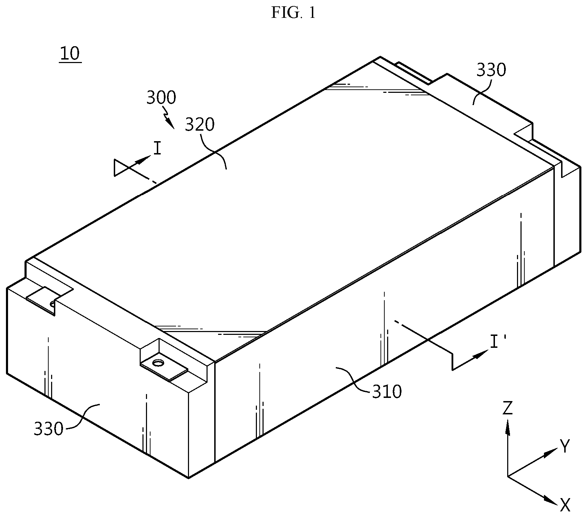

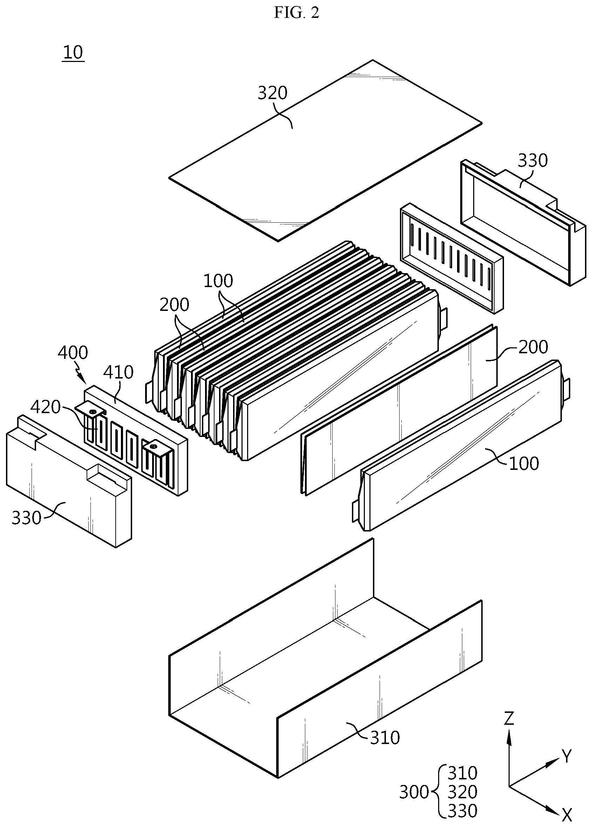

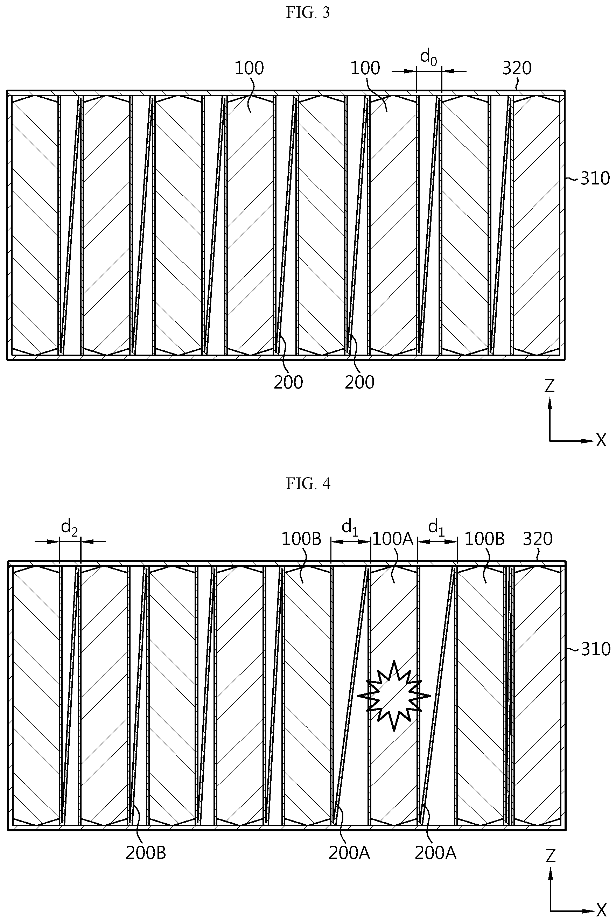

FIG. 1 is a perspective view of a battery module according to an embodiment of the present disclosure, and FIG. 2 is an exploded perspective view of a battery module according to an embodiment of the present disclosure. FIG. 3 is a cross-sectional view of a battery module according to an embodiment of the present disclosure, which may be a cross-sectional view taken along line I - I' in FIG. 1. In addition, FIG. 4 is a drawing illustrating a deformation member that is deformed when the temperature of a battery cell included in a battery module reaches a specific temperature or higher according to an embodiment of the present disclosure.

Referring to FIGS. 1 to 4, a battery module 10 according to an embodiment of the present disclosure includes a battery cell 100 and a deformation member 200.

A plurality of battery cells 100 may be provided. The plurality of battery cells 100 may be provided to be stacked in one direction. For example, as shown in FIG. 2, the plurality of battery cells 100 may be stacked along the left-right direction (X-axis direction).

The battery cell 100 may be a pouch-type secondary battery. The battery cell 100 may include an electrode assembly and a cell case 110 that stores the electrode assembly. The cell case 110 may store the electrode assembly in a receiving portion, and the edges of the receiving portion may be heat-fused to form sealing portions. The sealing portion may be provided on three of the four edges of the battery cell 100.

In addition, each of the plurality of battery cells 100 may have an electrode lead 120. The electrode lead 120 may be connected to the electrode assembly, and may extend to the outside of the cell case 110, functioning as an electrode terminal.

A pair of electrode leads 120 may be provided, and the pair of electrode leads 120 may extend outward from both ends of the battery cell 100, for example, in the longitudinal direction (±Y-axis directions). In this case, the pair of electrode leads 120 may be a positive electrode lead and a negative electrode lead. The battery cell 100 may be configured such that two electrode leads 120 are located only at one end in the Y-axis direction, for example, at the end in the +Y-axis direction, as necessary.

The battery cell 100 may be provided to stand with the edge that does not include the sealing portion facing downward. As illustrated in FIG. 2, the plurality of battery cells 100 may be disposed side by side in a left-right direction (X-axis direction) while standing in a vertical direction (Z-axis direction). In this case, each battery cell 100 may have the sealing portions facing the front-back direction (Y-axis direction) and the upward direction (+Z-axis direction), and the receiving portion facing the left-right direction (X-axis direction). In the case where the battery cell 100 is disposed as described above, it is easy to control the venting direction to one side, and edge cooling may be performed through the surface that does not include the sealing portion, thereby securing cooling performance.

The present disclosure is not limited to a specific type or shape of the battery cell 100, and various battery cells 100 known at the time of filing the present disclosure may be applied. In the present embodiment, although a pouch-type secondary battery with high energy density and easy stacking will be described as shown in the drawing, it is obvious that a cylindrical or prismatic secondary battery may also be applied to the battery cell 100.

The deformation member 200 may be provided on one side of the battery cell 100. For example, as disclosed in the embodiment illustrated in FIG. 3, the deformation member 200 may be provided on both sides of the battery cell 100 in the left-right direction. The deformation member 200 may be configured to be in contact with the receiving portion of the battery cell 100. The deformation member 200 may be in a compressed state by the battery cells 100.

The deformation member 200 may be configured to extend along the longitudinal direction (front-back direction) of the battery cell 100. The deformation member 200 may be provided to correspond to the length of the deformation member 200. Alternatively, a plurality of deformation members 200 may be provided in one battery cell 100 so as to spaced apart from each other.

In addition, the deformation member 200 may be configured to change its shape at a specific temperature or higher. In particular, the deformation member 200 may be configured to increase in volume in one direction as the shape thereof changes. As an example, as disclosed in the embodiment illustrated in FIG. 4, the deformation member 200 may be provided on both sides of the battery cell 100 in the left-right direction, and may be configured to increase in volume in the left-right direction as the shape thereof changes at a specific temperature or higher. The deformation member 200 may be configured to increase in width or length at a specific temperature or higher.

Here, the specific temperature may indicate a temperature higher than the temperature at which the battery cell 100 is repeatedly charged and discharged. For example, the normal operating temperature is approximately 60 degrees C, and the specific temperature may be defined as approximately 60 degrees C or higher.

As a result, the volume of the deformation member 200 may increase when the temperature of the battery cell 100 reaches a specific temperature, so that the battery cell 100 may be spaced or separated from an adjacent battery cell 100.

In addition, the deformation member 200 may be configured as a metal pad that is thinner than the battery cell 100. The deformation member 200 may be configured as a shape-memory alloy. A shape-memory alloy refers to an alloy that has a property of returning to its original shape before deformation by heating even if it is deformed into another shape. Since the shape-memory alloy remembers its original shape, even if it is deformed by applying force, it may be restored to its original shape by heating it slightly.

Due to this property of the shape-memory alloy, the deformation member 200 in the compressed state by the battery cells 100 on one side of the battery cell 100 may be restored (deformed) to its original shape by receiving heat from the battery cell 100 of which the temperature reached a specific temperature or higher.

According to the above-implemented configuration of the present disclosure, when a thermal event occurs in any battery cell 100 inside the battery module 10, the shape of the deformation member 200 made of a shape-memory alloy may change, so that the battery cell 100 where the event occurred may be spaced or separated from an adjacent battery cell 100. As a result, when a thermal event occurs in any battery cell 100, heat may be prevented from being transferred to the adjacent battery cell 100, so that thermal runaway propagation between the battery cells 100 may be effectively prevented or delayed. Therefore, the safety and reliability of the battery module 10 may be ensured.

In addition, according to the above-implemented configuration of the present disclosure, excessive heat generation of the battery cell 100 may be detected using the deformation member 200 in contact with the battery cell 100. Therefore, additional temperature sensing and control components are unnecessary, so that productivity may be improved when manufacturing the battery module 10.

The deformation member 200 may be configured such that the volume thereof changes reversibly. That is, when the deformation member 200 deformed at a specific temperature or higher returns to the normal operating temperature, it may be configured to be restored to its original state. Accordingly, when the excessive heating problem of the battery cell 100 is resolved and the temperature thereof returns to the normal temperature, the volume of the deformation member 200 may also return to the original volume in the compressed state by the battery cells 100.

According to the above-implemented configuration of the present disclosure, as the deformation member 200 is restored to its original state at the normal operating temperature, the arrangement of the battery cells 100 may be maintained. Therefore, high durability and reliability of the battery module 10 may be provided.

The battery module 10 according to an embodiment of the present disclosure may further include a module case 300. The module case 300 may be configured to store a plurality of battery cells 100 and deformation members 200. Specifically, the module case 300 may be configured to have an inner space formed therein and store a plurality of battery cells 100 and deformation members 200 in the inner space.

Specifically, referring to FIGS. 1 and 2, the module case 300 may include a case body 310 and a top plate 320. The case body 310 may be configured to have at least an upper opening. For example, the case body 310 may be configured to have an upper opening, a front opening, and a rear opening. That is, the case body 310 may be configured as a U-frame.

The case body 310 may be configured as a metal material having rigidity and heat resistance in order to physically or chemically protect the stored battery cells 100.

The top plate 320 may be provided to form the upper surface of the module case 300. The top plate 320 may be coupled to cover the upper opening of the case body 310. The top plate 320 may be welded to the case body 310. In this case, the top plate 320 and the case body 310 may be coupled to each other into a square tube with front and rear openings.

The module case 300 may include end plates 330 provided on the front and rear openings of the case body 310. The end plate 330 may be welded to the case body 310. Although not shown in the drawings for convenience, the end plate 330 may be configured such that, for example, an inner surface is made of an insulating material and an outer surface is made of a metal material. In addition, the end plate 330 may be partially provided with holes or slits for exposing components that are required to be exposed to the outside, such as a positive electrode terminal and negative electrode terminal or a connector of the battery module 10.

Alternatively, the module case 300 may be manufactured in the form of a mono-frame in which the top plate 320 and the case body 310 are integrated with each other. Alternatively, respective plates may be manufactured separately and then joined to each other through welding or the like to form the module case 200. However, the present disclosure is not limited to a specific material or form of the module case 300.

In addition, referring to FIG. 2, the battery module 10 of the present disclosure may further include a bus-bar frame assembly 400. The bus-bar frame assembly 400 may be provided inside the module case 300 and configured to cover at least one side of the plurality of battery cells 100. In the present embodiment, as shown in FIG. 2, the bus-bar frame assembly 400 may be coupled to the front and rear sides of the plurality of battery cells 100.

The bus-bar frame assembly 400 may include a bus-bar frame 410 and a plurality of bus-bars 420. The bus-bar frame 410 may be disposed to be coupled substantially to the front and rear sides of the plurality of battery cells 100. The bus-bar frame 410 may have slits through which the electrode leads 120 of the battery cells 100 extend outward in the +Y-axis or -Y-axis direction. In addition, the bus-bar frame 410 may be formed of a material having electrical insulation, such as a plastic material, and configured such that the bus-bar 420 may be attached to the outer surface.

The plurality of bus-bars 420, as a means for connecting the battery cells 100 in series and/or in parallel, may be formed of a metal material, such as copper, aluminum, nickel, etc., and may be configured in the shape of bars. The electrode leads 120 of the battery cells 100 may pass through the slits of the bus-bar frame 410 and to extend outside the bus-bar frame 410, and the extending portions may be attached to the surface of the bus-bar 420 by welding or the like.

The volume change of the deformation member 200 according to an embodiment will be described in more detail with reference to FIGS. 3 and 4.

In an embodiment, referring to FIGS. 3 and 4, a plurality of battery cells 100 may be stacked in one direction, and a deformation member 200 may be provided between adjacent battery cells 100.

In this case, at least one deformation member 200 may be included in one battery module 10. A plurality of deformation members 200 may be provided along one direction in which the battery cells 100 are arranged. The one direction may be defined as the direction in which the battery cells 100 are arranged, that is, as the left-right direction (parallel to the X-axis). The deformation member 200 may be disposed between groups of one or more battery cells 100. That is, the deformation member 200 may be configured to group a plurality of battery cells 100. For example, as illustrated in FIG. 3, the deformation member 200 may be disposed for each battery cell 100, so that the battery cell 100 and the deformation member 200 may be disposed alternately inside one battery module 10.

In addition, according to the above-implemented configuration of the present disclosure, even when the battery cell 100 swells, the deformation member 200 and the battery cell 100 may compress each other to contribute to the structural rigidity of the battery cells 100.

Specifically, referring to FIG. 3, when the battery cell 100 is in normal operation, the deformation member 200 may be configured to be somewhat compressed by the battery cells 100 provided on both sides of the deformation member 200. In this case, the width of the deformation member 200 may be defined as d₀.

Referring to FIG. 4, the gap between the battery cell 100A of which the temperature reached a specific temperature or higher and the adjacent battery cell 100B may be configured to increase due to deformation of the deformation member 200. Specifically, the gap between the battery cell 100A of which the temperature reached a specific temperature or higher and the adjacent battery cell 100B may correspond to the width of the deformation member 200. That is, the deformation members 200A provided on both sides of the battery cell 100A of which the temperature reached a specific temperature or higher may be deformed to increase in volume (width), thereby increasing the gap between the battery cell 100A of which the temperature reached a specific temperature or higher and the adjacent battery cell 100B. In this case, the width of the deformation member 200A provided on both sides of the battery cell 100A of which the temperature reached a specific temperature or higher may be defined as d₁.

Meanwhile, the deformation member 200A in contact with the battery cell 100A of which the temperature reached a specific temperature or higher may be configured to increase in volume in one direction, and the remaining deformation member 200B may be configured to decrease in volume in one direction. In this case, the width of the remaining deformation member 200B may be defined as d₂.

According to the above-implemented configuration of the present disclosure, even if the shape of the deformation member 200 is deformed and the gap d₁ between the heating battery cell 100A and the other battery cell 100B increases, the volume of the entire stack of battery cells 100 may be maintained, and the appearance of the battery module 10 does not change. Accordingly, according to the above-implemented configuration of the present disclosure, the energy density of the battery module 10 is not affected, so the energy efficiency of the battery module 10 may be secured.

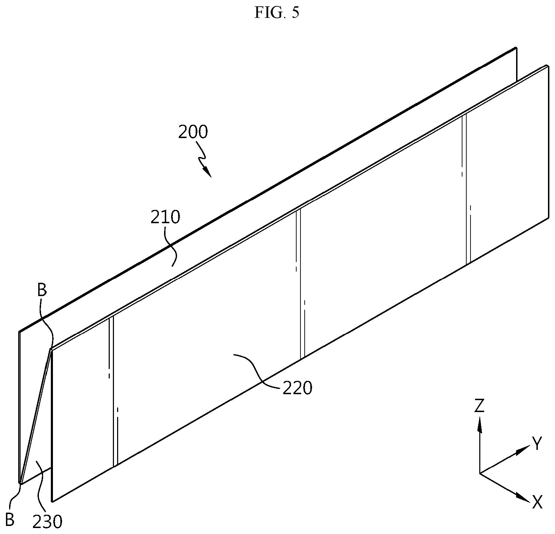

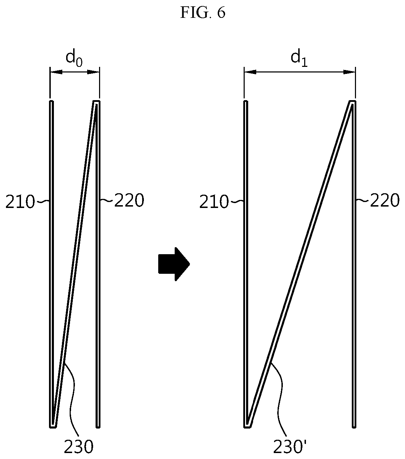

FIG. 5 and FIG. 6 are drawings illustrating the structure of a deformation member included in a battery module according to an embodiment of the present disclosure.

The structure of the deformation member 200 will be described in detail with reference to FIGS. 5 and 6. The deformation member 200 may have a first contact portion 210, a second contact portion 220, and a connection portion 230. The first contact portion 210 may be configured to come into contact with one side of the battery cell 100. The first contact portion 210 may be configured in the form of a plate. Accordingly, the first contact portion 210 may come into surface contact with one side of the battery cell 100. According to the above-implemented configuration of the present disclosure, since the first contact portion 210 is stably supported by one side of the battery cell 100, even if the deformation member 200 is deformed at a specific temperature, a stable support structure with the battery cell 100 may be maintained.

In addition, the first contact portion 210 may have one end and the other end. For example, in the embodiment illustrated in FIG. 5, one end of the first contact portion 210 may refer to an edge of the first contact portion 210 located at the top (in the +Z-axis direction), and the other end of the first contact portion 210 may refer to an edge of the first contact portion 210 located at the bottom (in the -Z-axis direction).

The second contact portion 220 may be configured to be spaced a predetermined distance apart from the first contact portion 210. That is, at a specific temperature, the first contact portion 210 and the second contact portion 220 may be configured to be spaced apart by approximately a distance of d₁. The second contact portion 220 may be configured to face the first contact portion 210 in parallel. In addition, the second contact portion 220 may be configured to come into contact with one side of the battery cell 100 and/or the inner side of the module case 300. The second contact portion 220 may be configured in the form of a plate. According to the above-implemented configuration of the present disclosure, since the second contact portion 220 is stably supported by one side of the battery cell 100 and/or the module case 300, a stable support structure may be maintained even if the deformation member 200 is deformed at a specific temperature.

In addition, the second contact portion 220 may have one end facing one end of the first contact portion 210, and the other end facing the other end of the first contact portion 210. For example, in the embodiment illustrated in FIG. 5, one end of the second contact portion 220 may refer to an edge of the second contact portion 220 located at the top (in the +Z-axis direction), and the other end of the second contact portion 220 may refer to an edge of the second contact portion 220 located at the bottom (in the -Z-axis direction).

The connection portion 230 may be configured to connect the first contact portion 210 and the second contact portion 220 to each other. The connection portion 230 may be configured to increase the gap between the first contact portion 210 and the second contact portion 220 at a specific temperature or higher. That is, at a specific temperature or higher, both ends of the connection portion 230 may move in the direction in which the first contact portion 210 and the second contact portion 220 are disposed, so that the gap between the first contact portion 210 and the second contact portion 220 may change from d₀ to d₁.

In particular, as disclosed in the embodiment illustrated in the drawing, the connection portion 230 may be configured to connect one end of the first contact portion 210 and the other end of the second contact portion 220 to each other. In this case, the connection portion 230 may be configured in the form of a plate that connects one end of the first contact portion 210 and the other end of the second contact portion 220 to each other. That is, the deformation member 200 may be configured in a Z-shape when viewed from the front or rear. The deformation member 200 may be configured in the form of, for example, a leaf spring.

More specifically, the deformation member 200 may be configured to be folded at least twice. In this case, the deformation member 200 may have a folded portion B. The folded portion B may be formed by folding at least a portion of the deformation member 200. At least two folded portions B may be provided. The folded portions B may be provided in opposite directions to each other. That is, the deformation member 200 may be configured to be folded at least twice in opposite directions.

The folded portion B may indicate both ends of the connection portion 230. The folded portion B may be provided at a portion where the connection portion 230 and the first contact portion 210 and/or the second contact portion 220 are connected. That is, as disclosed in the embodiment illustrated in FIG. 5, the folded portion B may be provided at the other end of the first contact portion 210 and one end of the second contact portion 220.

The deformation member 200 may be configured such that the folded portion B is unfolded at a specific temperature or higher. That is, the folded portion B of the deformation member 200 may be unfolded at a specific temperature or higher, thereby increasing the volume of the deformation member 200. Specifically, the folded portion B may be configured to have elasticity. For example, the folded portion B may be configured to have elasticity according to the compressing force from the battery cell 100. Thus, as disclosed in the embodiment illustrated in FIG. 6, the deformation member 200 may be compressed by the battery cells 100 during normal operation of the battery cell 100, and when the battery cell 100 is abnormally heating and the temperature thereof reaches a specific temperature, the folded portion B may be unfolded, so that the width of the deformation member 200 may change from d₀ to d₁.

As a more specific embodiment, referring to FIG. 3 and FIG. 4, the first contact portion 210 may be configured to come into contact with one side of the battery cell 100 (the right side of the battery cell 100 in FIG. 3), and the second contact portion 220 may be configured to come into contact with the other side of the battery cell 100 (the left side of the battery cell 100 in FIG. 3). In addition, the connection portion 230 may be configured to connect the lower end of the first contact portion 210 and the upper end of the second contact portion 220. In this case, when the abnormally heating battery cell 100A reaches a specific temperature or higher, the deformation member 200 may change the gap between the first contact portion 210 and the second contact portion 220 from approximately d₀ to d₁ or d₂. Accordingly, the gap between the abnormally heating battery cell 100A and the adjacent battery cell 100B may be widened, so that they may be separated from each other.

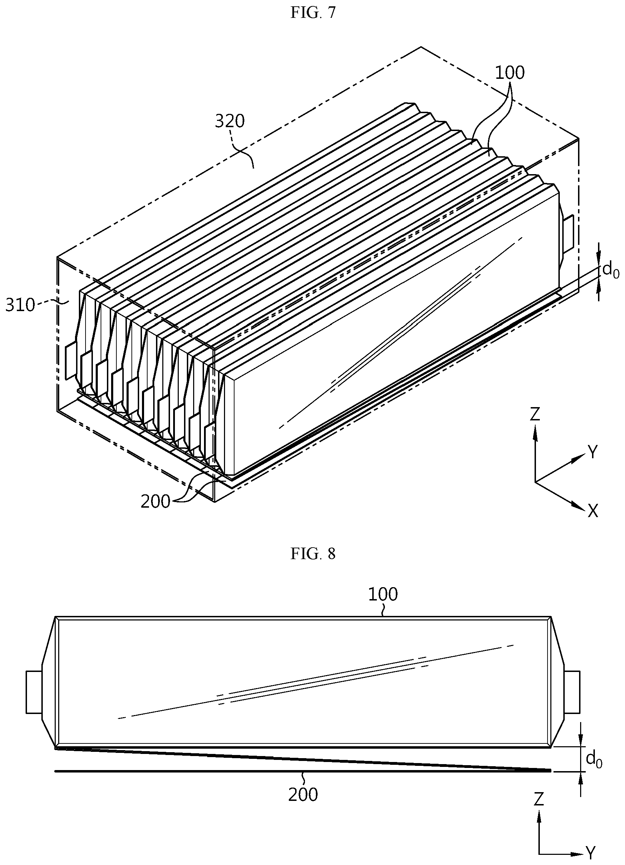

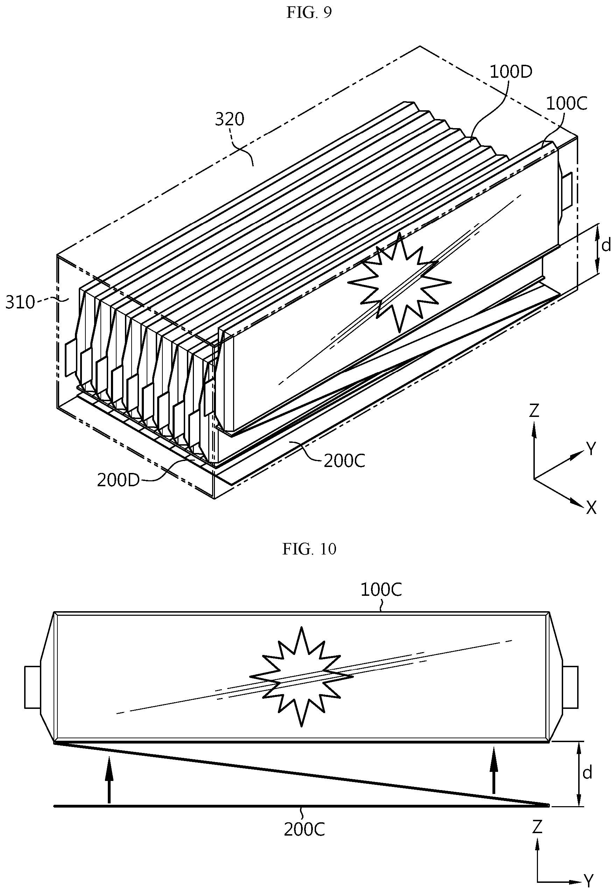

FIG. 7 is an internal perspective view of a battery module according to another embodiment of the present disclosure, and FIG. 8 is a side view of a battery cell and a deformation member included in a battery module according to another embodiment of the present disclosure. In addition, FIG. 9 is an internal perspective view illustrating a deformation member that is deformed when the temperature of a battery cell included in a battery module reaches a specific temperature or higher according to another embodiment of the present disclosure. Furthermore, FIG. 10 is a side view illustrating deformation member that is deformed when the temperature of a battery cell included in a battery module reaches a specific temperature or higher according to another embodiment of the present disclosure.

As another embodiment, referring to FIGS. 7 to 10, a deformation member 200 may be provided at the bottom of a battery cell 100. This deformation member 200 may be in a compressed state by the weight of the battery cell 100. The deformation member 200 may be provided for each battery cell 100. In this case, the first contact portion 210 may be configured to come into contact with the lower surface of the battery cell 100, and the second contact portion 220 may be configured to come into contact with the bottom surface of the module case 300 of the battery cell 100. In addition, the connection portion 230 may be configured to connect the front end of the first contact portion 210 and the rear end of the second contact portion 220.

Referring to FIGS. 7 and 8, when the battery cell 100 is in normal operation, the deformation member 200 may be configured to be somewhat compressed by the battery cell 100 provided on the deformation member 200. In this case, the height of the deformation member 200 may be defined as d₀.

Referring to FIGS. 9 and 10, the deformation member 200 may be configured to separate a battery cell 100C of which the temperature reached a specific temperature or higher from neighboring battery cells 100D by deformation thereof. Specifically, when the temperature of the abnormally heating battery cell 100C reaches a specific temperature or higher, the deformation member 200 may change the gap between the first contact portion 210 and the second contact portion 220 from approximately d₀ to d. Accordingly, the abnormally heating battery cell 100C may be completely separated upward from other battery cells 100D.

According to the above-implemented configuration of the present disclosure, the abnormally heating battery cell 100C may be physically separated from the neighboring battery cells 100D through the deformation of the deformation member 200 made of a shape-memory alloy. As a result, when a thermal event occurs in the battery cell 100C, heat may be prevented from spreading to the adjacent battery cell 100D, so that thermal runaway propagation between the battery cells 100 may be effectively prevented or delayed. Therefore, the safety and reliability of the battery module 10 may be ensured.

In addition, in this case, since only the abnormally heating battery cell 100C needs to be moved, the structure of the entire battery cell 100 stack may not be significantly changed. Therefore, the heating battery cell 100C and other battery cells 100D may be separated more efficiently.

That is, the battery module 10 according to an embodiment of the present disclosure may include a plurality of battery cells 100 stacked in one direction, and a deformation member 200 configured as a shape-memory alloy plate and provided between the battery cells 100 or at the bottom of each battery cell 100. In this case, the deformation member 200 may have at least two folded portions B configured to be folded in opposite directions, and when the temperature of any one battery cell 100A or 100C of the battery cells 100 rises, the folded portion B may be unfolded at a specific temperature or higher, so that the battery cell 100A or 100C may be spaced or separated from the remaining battery cells 100B and 100D.

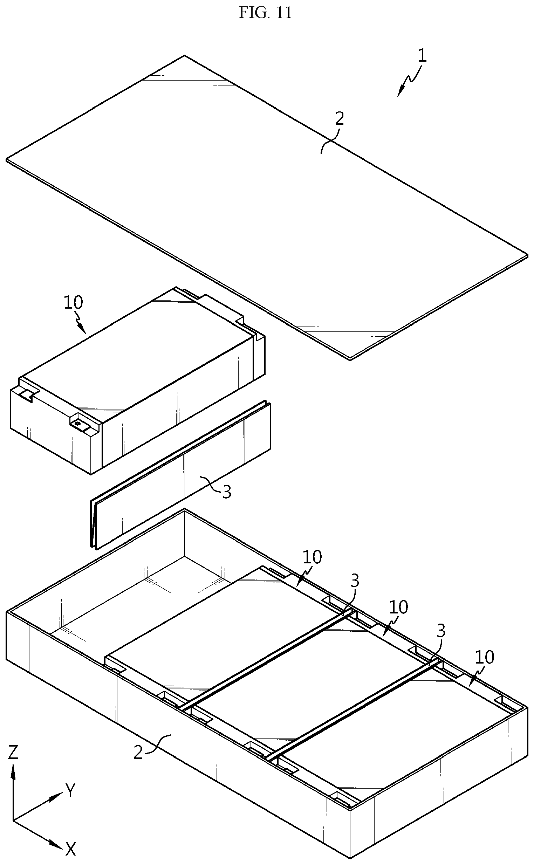

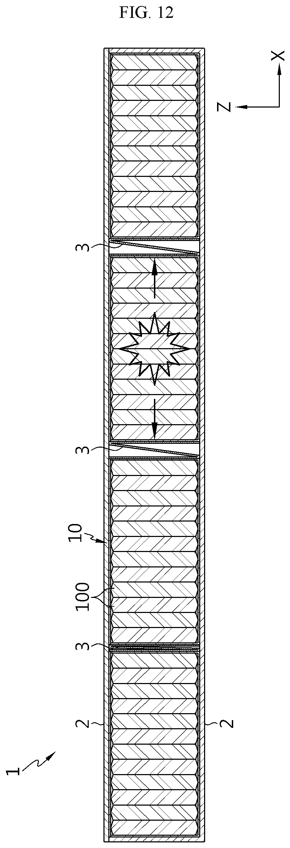

FIG. 11 is a schematic perspective view of a battery pack including a battery module according to an embodiment of the present disclosure, and FIG. 12 is a cross-sectional view of a battery pack to which a module deformation member is applied according to an embodiment of the present disclosure.

Referring to FIG. 11, a battery pack 1 according to an embodiment of the present disclosure may include one or more battery modules 10 according to an embodiment of the present disclosure described above. The battery pack 1 according to the present disclosure may further include a pack case 2 for storing a BMS (Battery Management System), a current sensor, and a fuse for integrated control of charging and discharging of one or more battery modules, and components described above.

The battery pack 1 according to an embodiment of the present disclosure may further include a module deformation member 3. The module deformation member 3 may be provided at least one side of the module case 300. The module deformation member 3 may be configured to change its shape at a specific temperature or higher. In particular, the module deformation member 3 may be configured to increase in volume in one direction as the shape thereof changes. Therefore, a battery module 10 of which the temperature reached a specific temperature may be spaced or separated from an adjacent battery module 10 as the volume of the module deformation member 3 increases.

The shape, structure, etc. of the module deformation member 3 are the same as those of the deformation member 200, excluding the configuration in which it is provided on at least one side of the module case 300 instead of the battery cell 100, so a redundant description of the deformation member 200 will be omitted.

According to the above-implemented configuration of the present disclosure, when a thermal event occurs in any battery module 10 inside the battery pack 1, the shape of the module deformation member 3 made of a shape-memory alloy changes, so that the battery module 10 where the event occurred may be spaced or separated from the adjacent battery module 10. As a result, when a thermal event occurs in any battery module 10, heat may be prevented from spreading to the adjacent battery module 10, so that thermal runaway propagation between battery modules 10 may be effectively prevented or delayed. Therefore, the safety and reliability of the battery pack 1 may be ensured.

In addition, according to the above-implemented configuration of the present disclosure, excessive heat generation of the battery module 10 may be detected using the deformation member 200 in contact with the battery module 10. Therefore, additional temperature sensing and control components are unnecessary, so that productivity may be improved when manufacturing the battery pack 1.

As a more specific embodiment, referring to FIGS. 11 and 12, a plurality of battery modules 10 may be arranged in one direction, and the module deformation member 3 may be provided between adjacent battery modules 10. The module deformation member 3 may be configured to increase the gap between adjacent battery modules 10 at a specific temperature or higher.

Specifically, referring to FIG. 11, when the battery module 10 is operating normally, the module deformation member 3 may be in the state of being somewhat compressed by the battery modules 10 provided on both sides of the module deformation member 3. In addition, referring to FIG. 12, the gap between the battery module 10 of which the temperature reached a specific temperature or higher and the adjacent battery module 10 may increase due to the deformation of the module deformation member 3. Specifically, the gap between the battery module 10 of which the temperature reached a specific temperature or higher and the adjacent battery module 10 may correspond to the width of the module deformation member 3. That is, the module deformation members 3 provided on both sides of the battery module 10 of which the temperature reached a specific temperature or higher may be deformed to increase in volume (width), so that the gap between the battery module 10 of which the temperature reached a specific temperature or higher and the adjacent battery module 10 may increase.

Meanwhile, referring to FIG. 12, the module deformation member 3 that is in contact with the battery module 10 of which the temperature reached a specific temperature or higher may be configured to increase in volume in one direction, and the remaining module deformation members 3 may be configured to decrease in volume in one direction.

According to the above-implemented configuration of the present disclosure, even if the shape of the module deformation member 3 is deformed and the gap between the heating battery module 10 and another battery module 10 increases, the volume of the entire stack of the battery modules 10 may be maintained, and the appearance of the battery pack 1 does not change. Therefore, according to the above-implemented configuration of the present disclosure, the energy density of the battery pack 1 is not affected, so the energy efficiency of the battery pack 1 may be secured.

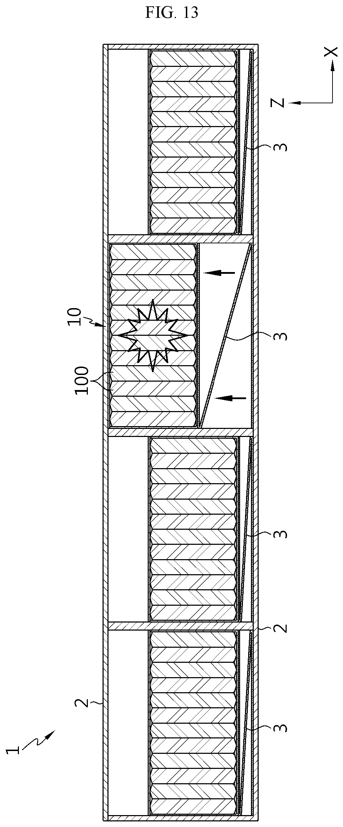

FIG. 13 is a cross-sectional view of a battery pack to which a module deformation member is applied according to another embodiment of the present disclosure.

As another embodiment, referring to FIG. 13, the module deformation member 3 may be provided at the bottom of the battery module 10. This module deformation member 3 may be in a compressed state due to the weight of the battery module 10. The module deformation member 3 may be provided for each battery module 10.

Referring to FIG. 13, a battery module 10 of which the temperature reached a specific temperature or higher may be configured to be separated from neighboring battery modules 10 by the deformation of the module deformation member 3. Specifically, when an abnormally heating battery module 10 reaches a specific temperature or higher, the height of the module deformation member 3 increases, so that the abnormally heating battery module 10 may be completely separated upward from other battery modules 10.

According to the above-implemented configuration of the present disclosure, an abnormally heating battery module 10 may be physically separated from neighboring battery modules 10 through the deformation of the module deformation member 3 made of a shape-memory alloy. As a result, when a thermal event occurs in the battery module 10, heat may be prevented from spreading to an adjacent battery module 10, so that thermal runaway propagation between battery modules 10 may be effectively prevented or delayed. Therefore, the safety and reliability of the battery pack 1 may be ensured.

In addition, in this case, since only the abnormally heating battery module 10 needs to be moved, the structure of the entire battery module 10 stack may not be significantly changed. Therefore, the heating battery module 10 and other battery modules 10 may be separated more efficiently.

That is, a battery pack 1 according to an embodiment of the present disclosure may include a plurality of battery modules 10 stacked in one direction, and a module deformation member 3 configured as a shape-memory alloy plate and provided between the battery modules 10 or at the bottom of each battery module 10. In this case, the module deformation member 3 may include at least two folded portions B (see FIGS. 5 and 6) configured to be folded in opposite directions, and when the temperature of one of the battery modules 10 rises to a specific temperature or higher, the folded portions B may be unfolded so that the battery module 10 may be spaced or separated from the remaining battery modules 10.

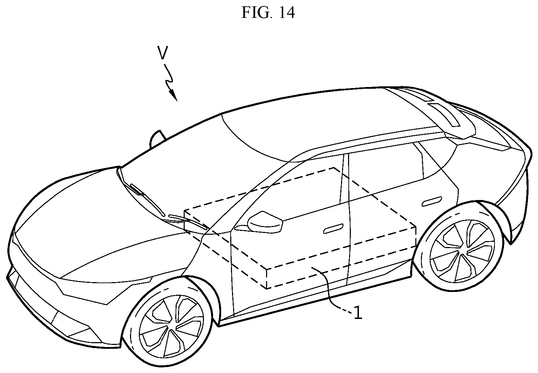

FIG. 14 is a schematic perspective view of a vehicle including a battery pack according to an embodiment of the present disclosure.

Referring to FIG. 14, a vehicle V according to an embodiment of the present disclosure may include one or more battery packs 1 according to an embodiment of the present disclosure or battery modules 10 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V operates by power supplied from the battery pack 1 or the battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells; and
a deformation member provided on at least one side of the battery cell and configured to change its shape at a specific temperature or higher and increase in volume in a direction toward the one side.

2. The battery module according to claim 1,
wherein the deformation member is formed of a shape-memory alloy.

3. The battery module according to claim 1,
wherein the volume of the deformation member is configured to change reversibly.

4. The battery module according to claim 1,
wherein the plurality of battery cells are stacked in one direction, and
wherein the deformation member is provided between adjacent battery cells,
so that a gap between a battery cell of which a temperature reached the specific temperature or higher and an adjacent battery cell is increased by deformation of the deformation member.

5. The battery module according to claim 4,
wherein a plurality of deformation members are disposed along the one direction, and
wherein a deformation member that comes into contact with the battery cell of which the temperature reached the specific temperature or higher increases in volume in the one direction, and
the remaining deformation members are configured to decrease in volume in the one direction.

6. The battery module according to claim 1,
wherein the deformation member comprises
a first contact portion configured to come into contact with one side of the battery cell and having one end and the other end,
a second contact portion configured to be spaced a predetermined distance apart from the first contact portion and having one end facing one end of the first contact portion and the other end facing the other end of the first contact portion, and
a connection portion configured to connect the first contact portion and the second contact portion to each other and increase a gap between the first contact portion and the second contact portion at the specific temperature or higher.

7. The battery module according to claim 6,
wherein the connection portion is configured to connect one end of the first contact portion and the other end of the second contact portion to each other.

8. The battery module according to claim 1,
wherein the deformation member comprises a folded portion configured to be folded at least in part.

9. The battery module according to claim 8,
wherein the deformation member is configured such that the folded portion is unfolded at the specific temperature or higher.

10. The battery module according to claim 8,
wherein the folded portion is configured to have elasticity.

11. The battery module according to claim 1,
wherein the deformation member is provided at a bottom of the battery cell and is configured to separate a battery cell of which the temperature reached the specific temperature or higher from neighboring battery cells.

12. A battery module comprising:
a plurality of battery cells stacked in one direction; and
a deformation member configured as a shape-memory alloy plate and provided between the battery cells or at a bottom of each battery cell,
wherein the deformation member has at least two folded portions configured to be folded in opposite directions, and
wherein, in a case where a temperature of one of the battery cells rises, the folded portion is unfolded at a specific temperature or higher so that the battery cell is spaced or separated from remaining battery cells.

13. A battery pack comprising a battery module according to any one of claims 1 to 12.

14. The battery pack according to claim 13,
wherein a plurality of battery modules are provided,
further comprising a module deformation member provided between adjacent battery modules and configured to increase a gap between the adjacent battery modules at a specific temperature or higher.

15. The battery pack according to claim 13,
wherein a plurality of battery modules are provided,
further comprising a module deformation member provided at a bottom of the battery module and configured to separate the battery module from neighboring battery modules at a specific temperature or higher.

16. A battery pack comprising:
a plurality of battery modules stacked in one direction; and
a module deformation member configured as a shape-memory alloy plate and provided between the battery modules or at a bottom of each battery module,
wherein the module deformation member has at least two folded portions configured to be folded in opposite directions, and
in a case where a temperature of any one of the battery modules rises, the folded portion is unfolded at a specific temperature or higher, so that the battery module is spaced or separated from remaining battery modules.

17. A vehicle comprising a battery pack according to any one of claims 13 to 16.
